# EUROPÄISCHE PATENTSCHRIFT

(11) **EP 2 935 346 B1**
(45) Veröffentlichungstag und Bekanntmachung des Hinweises auf die Patenterteilung: **26.04.2017**
(21) Anmeldenummer: 13799601.3
(22) Anmeldetag: 06.12.2013
(51) Int. Cl.: C08F 2/06, C08F 220/18, C10L 1/196, C08L 31/04

(54) **POLYMERE ZUSAMMENSETZUNGEN AUS ETHYLEN-VINYLESTER-COPOLYMEREN ALKYL(METH)ACRYLATEN, VERFAHREN ZU DEREN HERSTELLUNG UND DEREN VERWENDUNG ALS POUR-POINT-DEPRESSANTS FÜR ROHÖLE, MINERALÖLE ODER MINERALÖLPRODUKTE**
POLYMER COMPOSITIONS OF ETHYLENE-VINYL ESTER COPOLYMERS AND ALKYL(METH)ACRYLATES, METHOD FOR THE PRODUCTION THEREOF AND USE THEREOF AS POUR-POINT DEPRESSANTS FOR CRUDE OILS, MINERAL OILS OR MINERAL OIL PRODUCTS
COMPOSITIONS POLYMÈRES EN COPOLYMÈRE ÉTHYLÈNE-ESTER DE VINYLE ALKYL(MÉTH)ACRYLATES, PROCÉDÉ POUR LA PRÉPARATION ET L'UTILISATION DESDITES COMPOSITIONS COMME PRODUITS AMÉLIORANT LE POINT D'ÉCOULEMENT POUR LES HUILES BRUTES, LES HUILES MINÉRALES OU LES PRODUITS PÉTROLIERS

(30) Priorität: 18.12.2012 EP 12197726
(43) Veröffentlichungstag der Anmeldung: 28.10.2015
(73) Patentinhaber: BASF SE, 67056 Ludwigshafen am Rhein (DE)
(72) Erfinder: GARCIA CASTRO, Ivette, 67067 Ludwigshafen (DE); GUMLICH, Kai, 50858 Köln (DE); FRENZEL, Stefan, 73054 Eislingen (DE); HEUKEN, Maria, 68163 Mannheim (DE); KONRAD, Rouven, 67591 Mörstadt (DE); NEUBECKER, Karin, 67227 Frankenthal (DE)
(74) Vertreter: BASF IP Association
(86) Internationale Anmeldenummer: PCT/EP2013/075746
(87) Internationale Veröffentlichungsnummer: WO 2014/095412

(56) Entgegenhaltungen:
- EP-A1- 1 674 554
- EP-A1- 1 808 450
- EP-A1- 2 305 753
- WO-A2-2011/076337
- US-A1- 2007 213 231
- DATABASE WPI Week 201302 Thomson Scientific, London, GB; AN 2012-M26485 XP2720254, ZHANG CHENGRU: "Diesel pour point depressant, useful in petroleum refining, transportation and storage applications, comprises ethylene-vinyl acetate co-polymer, styrene-maleic acid octadecyl alkyl ester, polymethacrylate, and non-ionic surfactant", & CN 102 559 302 A (LINYI SHINENGDE ENVIRONMENTAL PROT FUEL CHEMICAL CO) 11. Juli 2012 (2012-07-11)

## Beschreibung

Die vorliegende Erfindung betrifft polymere Zusammensetzungen erhältlich durch radikalische Polymerisation mindestens zweier verschiedener Alkyl(meth)acrylate in Gegenwart mindestens eines Ethylen-Vinylester-Copolymers, wobei als Alkyl(meth)acrylate eine Mischung umfassend Alkyl(meth)acrylate mit linearen C₁₂- bis C₆₀-Alkylresten sowie davon verschiedenen Alkyl(meth)acrylaten mit linearen C₁-bis C₁₁-Alkylresten und/oder verzweigten C₄- bis C₆₀-Alkylresten und/oder cyclischen C₅- bis C₂₀-Alkylresten eingesetzt wird. Die Erfindung betrifft weiterhin die Verwendung derartiger polymerer Zusammensetzungen als Pour-Point-Depressants für Rohöle, Mineralöle oder Mineralölprodukte.

Unterirdische Erdölformationen weisen üblicherweise höhere Temperaturen auf. Nach der Förderung des Rohöls an die Erdoberfläche kühlt daher das geförderte Rohöl je nach Fördertemperatur sowie den Lager- oder Transportbedingungen mehr oder weniger stark ab.

Rohöle weisen je nach ihrer Herkunft unterschiedliche Anteile an sogenannten Wachsen auf, welche im Wesentlichen aus langkettigen n-Paraffinen bestehen. Der Anteil derartiger Paraffine kann je nach Art des Rohöls typischerweise 1 bis 30 Gew.-% des Rohöls betragen. Die Paraffine können beim Abkühlen beim Unterschreiten einer bestimmten Temperatur üblicherweise in Form von Plättchen kristallisieren. Durch die ausgefallenen Paraffine wird die Fließfähigkeit des Öls erheblich beeinträchtigt. Die plättchenförmigen n-Paraffinkristalle können eine Art Kartenhausstruktur bilden, welche das Rohöl einschließt, so dass das Rohöl stockt, obwohl der überwiegende Teil noch flüssig ist. Die niedrigste Temperatur, bei der eine Probe eines Öls beim Abkühlen gerade noch fließt, wird als Pour-Point ("Fließgrenze") bezeichnet. Für die Messung des Pour-Points werden standardisierte Messverfahren eingesetzt. Ausgefallene Paraffine können Filter, Pumpen, Rohrleitungen und andere Anlagen verstopfen oder sich in Tanks ablagern und verursachen so hohen Reinigungsaufwand.

Die Lagerstättentemperatur von Öllagerstätten liegt in der Regel oberhalb von Raumtemperatur, beispielsweise bei 40°C bis 100°C. Aus solchen Lagerstätten wird Rohöl noch warm gefördert, und es kühlt beim oder nach dem Fördern naturgemäß mehr oder weniger schnell auf Raumtemperatur oder bei entsprechenden klimatischen Verhältnissen auch auf Temperaturen darunter ab. Rohöle können Pour-Points oberhalb von Raumtemperatur aufweisen, so dass derartige Rohöle beim oder nach dem Fördern erstarren können.

Es ist bekannt, den Pour-Point von Rohölen durch geeignete Zusätze zu erniedrigen. Hierdurch kann verhindert werden, dass beim Abkühlen geförderten Rohöls Paraffine ausfallen. Geeignete Additive verhindern einerseits die Ausbildung der genannten, kartenhausähnlichen Strukturen und senken somit die Temperatur, bei der das Rohöl erstarrt. Weiterhin können Additive die Ausbildung feiner, gut kristallisierter, nicht-agglomerierender Paraffinkristalle fördern, so dass ein störungsfreier Öltransport sichergestellt ist. Derartige Additive werden auch als Pour-Point-Depressants bzw. Fließverbesserer bezeichnet.

Als Paraffin-Inhibitoren oder Wachs-Inhibitoren werden solche Substanzen bezeichnet, die das Ablagern von Paraffinen bzw. Paraffinwachsen auf Oberflächen, welche im Kontakt mit Rohölen oder anderen wachshaltigen Ölen und/oder Mineralölprodukten stehen, verhindern sollen.

Es ist bekannt, als Fließverbesserer Ethylencopolymere, insbesondere Copolymere aus Ethylen und ungesättigten Estern zu verwenden. Beispiele hierfür sind in DE-A-21 02 469 oder EP 84 148 A2 beschrieben.

DE-A-16 45 785 offenbart Heizölgemische mit herabgesetztem Fließpunkt. Die Gemische enthalten mindestens 3 Gew.-% von Polymeren mit unverzweigten, gesättigten Seitenketten mit mindestens 18 Kohlenstoffatomen, z.B. Homo- oder Copolymere von Alkylestern ungesättigter Mono- und Dicarbonsäuren sowie Homo-oder Copolymere verschiedener Alkylvinylether.

DE-A-20 47 448 offenbart Additive zur Viskositätserniedrigung in paraffinbasischen Rohölen. Bei den Additiven handelt es sich um Mischungen aus Polyvinylethern und Ethylen-Vinylacetat-Copolymeren.

EP 486 836 A1 offenbart Erdölmitteldestillate, beispielsweise Gasöle, Dieselöle oder Heizöl, welche zur Verbesserung der Fließeigenschaften in der Kälte polymere Zusätze enthalten. Bei den polymeren Zusätzen handelt es sich um eine Kombination üblicher Fließverbesserer auf Ethylenbasis, wie beispielsweise Copolymere aus Ethylen und Vinylacetat, Vinylpropionat oder Ethylhexylacrylat sowie Copolymere aus linearen oder verzweigten C₈- bis C₁₈-Alkyl(meth)acrylaten und/oder linearen oder verzweigten C₁₈- bis C₂₈-Alkylvinylethern im Gewichtsverhältnis 40 : 60 bis 95 : 5, wobei die Copolymere aus den Alkyl(meth)acrylaten und/oder Alkylvinylethern und den konventionellen Fließverbesserern als Mischung vorliegen können oder die Copolymere aus den Alkyl(meth)acrylaten und/oder Alkylvinylethern ganz oder teilweise auf die konventionellen Fließverbesserer aufgepfropft sein können. Die Alkylreste sind bevorzugt unverzweigt; es können aber bis zu 20 Gew.-% cyclische und/oder verzweigte Anteile vorhanden sein. Im einzigen Beispiel zur Herstellung eines Pfropfcopolymers werden n-Dodecylacrylat und n-Octadecylvinylether auf ein Copolymer aus Ethylen und Vinylpropionat mit einer mittleren molaren Masse Mₙ von ca. 2500 g/mol aufgepfropft. Als Lösemittel zur Herstellung wird Isoundecan verwendet und später wird mit aromatischen Lösemitteln verdünnt.

US 4,608,411 offenbart Pfropfcopolymere zur Verhinderung von Wachsausscheidungen aus Rohölen. Die Hauptkette besteht aus einem Copolymer aus Ethylen und einem Monomer ausgewählt aus der Gruppe von Vinylestern von C₂- bis C₁₈-Monocarbonsäuren, C₁- bis C₁₂-Estern ungesättigter Monocarbonsäuren oder ungesättigten α,β-Dicarbonsäuren, deren Estern oder Anhydriden. Hierauf werden Homo- oder Copolymere von Alkylacrylaten aufgepfropft, wobei deren Alkylgruppe mindestens 12 Kohlenstoffatome aufweist und wobei mindestens 20% der Alkylgruppen mindestens 22 Kohlenstoffatome aufweisen. Als Lösemittel werden verschiedene Kohlenwasserstoffe vorgeschlagen. EP 1 808 450 offenbart Pfropfcopolymer, erhältlich durch Pfropfung eines Esters aus einem C₈ bis C₂₂ -Alkohol und Acrylsäure auf ein Copolymer, enthaltend neben Ethylen Vinylacetat und einen weiteren Vinylester.

Die Herstellung derartiger Pfropfcopolymere zur Verwendung als Pour-Point-Depressants erfolgt üblicherweise in chemischen Produktionsstätten und die Produkte werden von dort zum Einsatzort transportiert, beispielsweise zu einem Ölfeld oder zu einer Offshore-Plattform. Derartige Einsatzorte können in kalten Regionen der Erde liegen. Um Transportkosten zu sparen, werden üblicherweise Konzentrate der Pfropfcopolymere in Kohlenwasserstoffen hergestellt, beispielsweise Konzentrate mit einem Polymergehalt von 50 bis 80 Gew.-% Polymeren. Derartige Konzentrate können als solche eingesetzt werden oder können von Anwendern vor Ort in gewünschter Art und Weise zu einsatzfertigen Formulierungen formuliert werden. Beispielsweise kann mit Lösemittel verdünnt werden und/oder es können weitere Additive zugegeben. Besonders vorteilhafte Pour-Point-Depressants können erhalten werden, indem man zur Herstellung besagter Pfropfcopolymere auf Basis von Ethylen-Vinylester-Copolymeren Alkyl(meth)acrylate mit C₁₈- bis C₂₂-Kohlenstoffresten verwendet. Derartige Produkte weisen aber den Nachteil auf, dass deren Lösungen in Kohlenwasserstoffen, insbesondere die genannten Konzentrate, beim Abkühlen auf Raumtemperatur fest werden. Sie müssen dementsprechend zum Einsatz erst aufgeschmolzen werden, was für den Anwender zusätzlichen Aufwand bedeutet.
Aufgabe der vorliegenden Erfindung ist daher die Bereitstellung von verbesserten Pour-Point-Depressants für Rohöle, wobei diese -analog zu den bekannten Produkten- durch radikalische Polymerisation von Alkyl(meth)acrylaten in Gegenwart von Ethylen-Vinylester-Copolymeren erhältlich sein sollen. Die verbesserten Produkte sollen den gleichen Einfluss auf den Pour-Point besitzen wie die bekannten Produkte. Sie sollen aber außerdem in konzentrierter Lösunα in Kohlenwasserstoffen bei Raumtemperatur flüssig sein und somit Rohölen auf einfache Art und Weise zugesetzt werden können.
Dementsprechend wurden polymere Zusammensetzungen gefunden, welche durch radikalische Polymerisation monoethylenisch ungesättigter Monomere (A) in Gegenwart mindestens eines Ethylen-Vinylester-Copolymers (B) erhältlich sind, und wobei
▪ die Monomere (A) mindestens 70 Gew.-% Alkyl(meth)acrylate (A1) bezogen auf die Menge aller Monomere (A) umfassen,
▪ die Ethylen-Vinylester-Copolymere (B) 55 bis 85 Gew.-% Ethylen sowie 15 bis 45 Gew.-% Vinylester der allgemeinen Formel H₂C=CH-O-(O)C-R¹ (III) umfassen, wobei R¹ für H oder einen C₁- bis C₄ Kohlenwasserstoffrest steht, und
▪ die Menge der Monomere (A) 70 bis 90 Gew.-% und die der Ethylen-Vinylester-Copolymere (B) 10 bis 30 Gew.-% bezogen auf die Summe der Monomere (A) und der Ethylen-Vinylester-Copolymere (B) zusammen beträgt,
und wobei es sich bei den Alkyl(meth)acrylaten (A1) um eine Mischung aus
(A1a) 50 bis 99 mol % mindestens eines Alkyl(meth)acrylats (A1a) der allgemeinen Formel H₂C=C(R²)-COOR³ handelt, wobei R² für H oder eine Methylgruppe und R³ für einen linearen Alkylrest mit 18 bis 24 Kohlenstoffatomen steht, und
(A1b) 1 bis 49 mol % mindestens eines Alkyl(meth)acrylats (A1b) der allgemeinen Formel H₂C=C(R²)-COOR⁴, wobei R² die bereits definierte Bedeutung hat und R⁴ für einen gesättigten, aliphatischen Kohlenwasserstoffrest ausgewählt aus der Gruppe von Resten R^{4a}, R^{4b} und R^{4c} steht und die Reste wie folgt definiert sind:
   R^{4a}: Lineare Alkylreste mit 1 bis 11 Kohlenstoffatomen,
   R^{4b}: Verzweigte Alkylreste mit 4 bis 60 Kohlenstoffatomen, und
   R^{4c}: Cyclische Alkylreste mit 5 bis 20 Kohlenstoffatomen,
   mit der Maßgabe, dass die Summe der Mengen von (A1 a) und (A1 b) 100 mol % ergibt.
In einer bevorzugten Ausführungsform der Erfindung umfasst die polymere Zusammensetzung weiterhin Kohlenwasserstoffe als Lösemittel, besonders bevorzugt Kohlenwasserstoffe mit einem Flammpunkt ≥ 60°C.
In einem weiteren Aspekt der Erfindung wurde die Verwendung der genannten polymeren Zusammensetzung, bevorzugt gelöst in Kohlenwasserstoffen, als Pour-Point-Depressant für Rohöl, Mineralöl und/oder Mineralölprodukte gefunden, indem man dem Rohöl, dem Mineralöl und/oder den Mineralölprodukten mindestens eine polymere Zusammensetzung der genannten Art zusetzt.
Zur Erfindung ist im Einzelnen das Folgende auszuführen:

### Eingesetzte Ausgangsmaterialien

### Monomere (A)

Bei den eingesetzten Monomeren (A) handelt es sich um monoethylenisch ungesättigte Monomere, mit der Maßgabe, dass es sich bei mindestens 70 Gew.-% der Monomere (A) um Alkyl(meth)acrylate (A1) handelt. Bei den Alkyl(meth)acrylaten (A1) handelt es sich erfindungsgemäß um eine Mischung aus mindestens einem Alkyl(meth)acrylat (A1a) und mindestens einem Alkyl(meth)acrylat (A1b)·

### Alkyl(meth)acrylate (A1)

### Alkyl(meth)acrylate (A1a)

Die Alkyl(meth)acrylate (A1a) weisen die allgemeine Formel H₂C=C(R²)-COOR³ auf, wobei R² für H oder eine Methylgruppe und R³ für einen linearen Alkylrest mit 18 bis 24 Kohlenstoffatomen und beispielsweise 18 bis 22 Kohlenstoffatomen steht. Bei R³ kann es sich um einen 1-Octadecylrest, 1-Nonadecylrest, 1-Eicosylrest, 1-Heneicosylrest, 1-Docosylrest oder 1-Tetracosylrest handeln. Selbstverständlich kann auch eine Mischung mehrerer verschiedener Alkyl(meth)acrylate (A1a) eingesetzt werden. Beispielsweise können Gemische eingesetzt werden, bei denen R³ für C₁₈-, C₂₀- und C₂₂-Reste steht.

In einer bevorzugten Ausführungsform handelt es sich bei mindestens einem der eingesetzten Alkyl(meth)acrylate (A1a) um 1-Docosyl(meth)acrylat (Behenylacrylat), d.h. R³ steht für einen linearen Alkylrest mit 22 Kohlenstoffatomen. In einer besonders bevorzugten Ausführungsform der Erfindung handelt es sich bei mindestens 40 Gew.-% der eingesetzten Alkyl(meth)acrylate (A1a) um 1-Docosyl(meth)acrylat. Vorteilhaft können Gemische umfassend 1-Octadecyl-(meth)acrylat, 1-Eicosyl(meth)methacrylat und 1-Docosyl(meth)acrylat eingesetzt werden. Derartige Gemische verschiedener (Meth)acrylate sind auch kommerziell erhältlich. Sie können neben den genannten C₁₈/C₂₀/C₂₂-(Meth)acrylaten noch geringe Mengen von (Meth)acrylaten mit höherer oder niedrigerer Kohlenstoffzahl als Nebenprodukte umfassen. Beispielsweise kann es sich um Gemische handeln, welche 40 bis 55 Gew.-%, 1-Octadecyl(meth)acrylat, 10 bis 15 Gew.-%, 1-Eicosyl(meth)methacrylat sowie 35 bis 45 Gew.-% 1-Docosyl(meth)acrylat umfassen.

### Alkyl(meth)acrylate (A1b)

Die Alkyl(meth)acrylate (A1b) weisen die allgemeine Formel H₂C=C(R²)-COOR⁴ auf, wobei R² die bereits definierte Bedeutung hat und R⁴ für einen gesättigten, aliphatischen Kohlenwasserstoffrest ausgewählt aus der Gruppe von Resten R^{4a}, R^{4b} und R^{4c} steht und die Reste wie folgt definiert sind:
R^{4a}: Lineare Alkylreste mit 1 bis 11, bevorzugt 2 bis 10 und besonders bevorzugt 2 bis 6 Kohlenstoffatomen,
R^{4b}: Verzweigte Alkylreste mit 4 bis 60, bevorzugt 4 bis 30, besonders bevorzugt 4 bis 17 Kohlenstoffatomen, und
R^{4c}: Cyclische Alkylreste mit 5 bis 20, bevorzugt 6 bis 12, besonders bevorzugt 6 bis 10 und beispielsweise 10 Kohlenstoffatomen.

Beispiele von linearer Alkylreste R^{4a} umfassen Ethyl-, n-Propyl, n-Butyl, n-Pentyl, n-Hexyl, n-Heptyl-, n-Octyl-, n-Nonyl-, n-Decyl- und n-Undecylreste, bevorzugt sind n-Propyl, n-Butyl, n-Pentyl, n-Hexyl, n-Heptyl-, n-Octyl-, n-Nonyl- und n-Decylreste, besonders bevorzugt sind Ethyl-, n-Propyl, n-Butyl, n-Pentyl und n-Hexylreste und ganz besonders bevorzugt sind n-Butylreste.

Verzweigte Alkylreste R^{4b} können einfach oder mehrfach verzweigt sein. Beispiele verzweigter Alkylreste R^{4b} umfassen i-Butyl-, t-Butyl-, 2,2'-Dimethylpropyl-, 2-Ethylhexyl-, 2-Propylheptyl-, i-Nonanol-, i-Decyl-, i-Tridecyl-, i-Heptadecylreste, bevorzugt sind t-Butyl-, 2-Ethylhexyl- und 2-Propylheptylreste.

Cyclische Alkylreste können R^{4c} können monocyclisch oder polycyclisch, insbesondere bicyclisch sein. Sie können weiterhin mit linearen und/oder verzweigten Alkylresten substituiert sein. Beispiele cyclischer Alkylreste R^{4c} umfassen Cyclopentyl-, Cyclohexyl-, 4-Methylcyclohexyl-, Cycloheptyl-, Bicyclo[2.2.1]heptyl-, Bicyclo[2.2.2]octyl- oder 2-(1,7,7-Trimethylbicyclo[2.2.1]heptylreste.

In einer Ausführungsform der Erfindung handelt es sich bei den Reste R⁴ um Reste R^{4a} und R^{4b}.

In einer bevorzugten Ausführungsform handelt es sich bei den Resten R⁴ um Reste R^{4b}, bevorzugt um Reste R^{4b} mit 4 bis 30 Kohlenstoffatomen, besonders bevorzugt um Reste R^{4b} mit 4 bis 17 Kohlenstoffatomen.

In einer weiteren bevorzugten Ausführungsform der Erfindung handelt es sich bei den Resten R⁴ um Reste R^{4c}, bevorzugt um Reste R^{4c} mit 6 bis 10 Kohlenstoffatomen.

Selbstverständlich kann auch eine Mischung mehrerer verschiedener Alkyl(meth)acrylate (A1b) eingesetzt werden.

### Weitere Monomere (A)

Neben den Monomeren (A1) können optional noch weitere, von den Monomeren (A1), d.h. den Monomeren (A1a) und (A1b) verschiedene monoethylenisch ungesättigte Monomere (A2) eingesetzt sein. Mithilfe von weiteren Monomeren (A) neben den Alkyl(meth)acrylaten (A1) lassen sich die Eigenschaften der erfindungsgemäßen polymeren Zusammensetzungen modifizieren und an die gewünschten Eigenschaften anpassen. Der Fachmann trifft eine geeignete Auswahl.

Bei weiteren Monomeren (A2) kann es sich insbesondere um Kohlenwasserstoffreste umfassende (Meth)acrylate handeln, welche nicht der obigen Definition für die Monomere (A1a) und (A1b) entsprechen.

Zu nennen sind insbesondere (Meth)acrylate (A2a) der allgemeinen Formel H₂C=CHR²-COOR⁵, wobei R² wie oben definiert ist und R⁵ für ein unsubstituierte oder alkylsubstituierte aromatische Kohlenwasserstoffreste mit 6 bis 30, bevorzugt 6 bis 18 Kohlenstoffatomen steht. Beispiele aromatischer Kohlenwasserstoffreste R⁵ umfassen Phenyl-, 4-Methylphenyl-, Benzyl- oder 2-Phenylethylreste.

Bei weiteren Monomeren (A2) kann es sich auch um (Meth)acrylate der allgemeinen Formel H₂C=C(R²)-COOR⁶ (A2b) handeln, wobei R² für H oder Methyl und R⁶ für einen linearen oder verzweigten aliphatischen und/oder aromatischen Kohlenwasserstoffrest 1 bis 60, bevorzugt 2 bis 30-Kolenstoffatomen steht, der mit OH-Gruppen substituiert sein kann und/oder bei dem nicht benachbarte Kohlenstoffatome durch Sauerstoffatome ersetzt sein können. Mit anderen Worten können Reste R³ also OH-Gruppen und/oder Ethergruppen -O- umfassen. Beispiele für (Meth)acrylate (A2b) umfassen Hydroxyethyl(meth)acrylat, Hydroxypropyl(meth)acrylat, Phenoxyethylacrylat oder Polypropylenglykolmono(meth)acrylat.

Bei weiteren Monomeren (A2) kann es sich auch um (Meth)acrylate der allgemeinen Formel H₂C=C(R²)-COOR⁷ (A2c) handeln, wobei R² für H oder Methyl und R⁷ für unsubstituierte oder alkylsubstituierte gesättigte, cyclische aliphatische Kohlenwasserstoffreste mit 5 bis 30, bevorzugt 6 bis 17 Kohlenstoffatomen steht. Ein Beispiel für einen Rest R⁷ ist ein Cyclohexylrest.

Bei weiteren Monomeren (A2) kann es sich auch um Vinylester der allgemeinen Formel H₂C=CH-O-(O)C-R⁷ (A2d) handeln, wobei R⁷ für einen linearen oder verzweigten Alkylrest mit 1 bis 60 Kohlenstoffatomen, bevorzugt 2 bis 30 Kohlenstoffatomen steht. Beispiele für Reste R⁷ umfassen Methyl-, Ethyl-, n-Propyl- oder n-Butylreste.

### Mengen der Monomere (A)

Erfindungsgemäß handelt es sich bei 50 bis 99 mol % der Monomere (A1) um Monomere (A1a) und bei 1 bis 50 mol % der Monomere (A1) um Monomere (A1b), mit der Maßgabe, dass die Summe von (A1a) und (A1b) 100 mol % ergibt. Mit anderen Worten gesagt handelt es sich bei den Monomeren (A1) also ausschließlich um ein Gemisch der Monomere (A1 a) und (A1 b). Bevorzugt werden 50 bis 90 mol % der Monomere (A1a) und 10 bis 50 mol % der Monomere (A1b) eingesetzt, besonders bevorzugt 70 bis 90 mol % der Monomere (A1a) und 10 bis 30 mol % der Monomere (A1b).

Bei Verwendung cyclischer Alkylreste R^{4c} hat es sich besonders bewährt, 50 bis 80 mol % der Monomere (A1a) und 20 bis 50 mol % der Monomere (A1b), bevorzugt 55 bis 75 mol % der Monomere (A1a) und 25 bis 45 mol % der Monomere (A1b) einzusetzen.

Erfindungsgemäß beträgt die Menge der Alkyl(meth)acrylate (A1) mindestens 70 Gew.-%, bevorzugt mindestens 80 Gew.-%, besonders bevorzugt mindestens 95 Gew.-% bezogen auf die Gesamtmenge aller Monomere (A). Ganz besonders bevorzugt werden als Monomere (A) ausschließlich Alkyl(meth)acrylate (A1) eingesetzt.

### Ethylen-Vinylester-Copolymere (B)

Die eingesetzten Ethylen-Vinylester-Copolymere (B) umfassen Ethylen sowie Vinylester der allgemeinen Formel H₂C=CH-O-(O)C-R¹. Hierbei steht R¹ für H oder einen C₁- bis C₄-Kohlenwasserstoffrest, beispielsweise einen Methyl-, Ethyl-, n-Propyl- oder n-Butylrest. Bevorzugt steht R¹ für H, Methyl oder Ethyl und besonders bevorzugt für Methyl.

Neben Ethylen und den Vinylestern können optional noch weitere Monomere vorhanden sein. Die Menge derartiger weiterer Monomere sollte aber 20 Gew.-%, bevorzugt 10 Gew.-% bezüglich der Menge aller Monomere nicht übersteigen und besonders bevorzugt sind neben Ethylen und den Vinylestern keine weiteren Monomere vorhanden.

Die Menge an Ethylen in den Ethylen-Vinylester-Copolymeren (B) beträgt 55 bis 85 Gew.-% und die Menge an Vinylestern beträgt 15 bis 45 Gew.-% bezüglich der Menge aller Monomere.

Bevorzugt beträgt die Menge an Ethylen 55 bis 75 Gew.-% und die Menge an Vinylestern 25 bis 45 Gew.-%, besonders bevorzugt 30 bis 40 Gew.-% und ganz besonders bevorzugt beträgt die Menge an Ethylen 60 bis 70 Gew.-% und die Menge an Vinylestern 30 bis 40 Gew.-%.

Das gewichtsmittlere Molekulargewicht M_{w} der eingesetzten Ethylen-Vinylester-Copolymere (B) beträgt bevorzugt mindestens 30000 g/mol, beispielsweise 30000 g/mol bis 200000 g/mol, bevorzugt 50000 g/mol bis 150000 g/mol.

### Polymere Zusammensetzung und deren Herstellung

Die erfindungsgemäßen polymeren Zusammensetzungen sind erhältlich durch radikalische Polymerisation der Monomere (A) in Gegenwart der Ethylen-Vinylester-Copolymere (B).

Das Mischungsverhältnis von Monomeren (A) und Ethylen-Vinylester-Copolymeren (B) wird je nach den gewünschten Eigenschaften der zu synthetisierenden polymeren Zusammensetzung gewählt, wobei die Menge der Monomere (A) zumindest 50 Gew.-% bezogen auf die Summe aus Monomeren (A) und Ethylen-Vinylester-Copolymeren (B) betragen sollte. In der Regel beträgt die Menge der Monomere (A) 70 bis 90 Gew.-% und die der Ethylen-Vinylester-Copolymere (B) 10 bis 30 Gew.-%. Bevorzugt beträgt die Menge der Monomere (A) 75 bis 85 Gew.-% und die der Ethylen-Vinylester-Copolymere (B) 15 bis 25 Gew.-%.

### Lösemittel

In einer bevorzugten Ausführungsform der Erfindung umfasst die polymere Zusammensetzung weiterhin geeignete Lösemittel. Die polymere Zusammensetzung sollte homogen dispergiert, bevorzugt gelöst darin vorliegen. Es sind prinzipiell alle Lösemittel geeignet, die diese Anforderungen erfüllen. Selbstverständlich können auch Gemische verschiedener Lösemittel eingesetzt werden.

Die Konzentration der polymeren Zusammensetzung in den Lösemitteln wird vom Fachmann entsprechend den gewünschten Eigenschaften der herzustellenden Formulierung gewählt. In einer bevorzugten Ausführungsform der Erfindung beträgt die Konzentration 20 bis 80 Gew.-%, bevorzugt 30 Gew.-% bis 70 Gew.-% und beispielsweise 40 bis 55 Gew.-% der polymeren Zusammensetzung bezüglich der Summe aller Komponenten der Zusammensetzung einschließlich verwendeten Lösemittel. Die Verwendung eines Konzentrats hat den Vorteil, dass die Transportkosten vom Ort der Herstellung zum Einsatzort, beispielsweise einer Ölförderanlage niedrig gehalten werden können.
Bei den Lösemitteln kann es sich beispielsweise um gesättigte aliphatische Kohlenwasserstoffgruppen umfassende, unpolare Lösemittel handeln, bevorzugt um solche, die einem Flammpunkt ≥ 60°C aufweisen. Beispiele derartiger Lösemittel umfassen gesättigte aliphatische Kohlenwasserstoffe, gesättigte aliphatische Alkohole oder Ester aus gesättigten aliphatischen Carbonsäuren und gesättigten aliphatischen Alkoholen, mit der Maßgabe, dass die Lösemittel jeweils einen Flammpunkt ≥ 60°C aufweisen. Beispiele für Alkohole umfassen aliphatische Alkohole mit mindestens 8 Kohlenstoffatomen wie 1-Octanol, 1-Decanol oder 1-Dodecanol. Beispiele für Ester umfassen Ester gesättigter Fettsäuren mit mindestens 8 Kohlenstoffatomen mit gesättigten aliphatischen Alkoholen, wie beispielsweise Laurinsäuremethylester oder Stearinsäuremethylester. Technische Gemische verschiedener aliphatischer Ester sind kommerziell erhältlich. In einer weiteren Ausführungsform der Erfindung können Ester aliphatischer oder cycloaliphatischer Dicarbonsäuren eingesetzt werden, wie beispielsweise Dialkylester von Cyclohexan-1,2-dicarbonsäure wie Cyclohexan-1,2-dicarbonsäure-diisononylester.

In einer bevorzugten Ausführungsform der Erfindung handelt es sich bei verwendeten Lösemitteln um Kohlenwasserstoffe. Es kann sich dabei um aliphatische, cycloaliphatische und/oder aromatische Kohlenwasserstoffe handeln. Bevorzugt handelt es sich um Kohlenwasserstoffe oder Kohlenwasserstoffgemische, welche einen Flammpunkt ≥ 60°C aufweisen.

Bei den Kohlenwasserstoffen kann es sich beispielsweise um gesättigte aliphatische Lösemittel bzw. Lösemittelgemische handeln. Es kann sich sowohl um paraffinische als auch um naphthenische, also gesättigte cylische Kohlenwasserstoffe handeln. Bevorzugt handelt es sich um hochsiedende aliphatische Kohlenwasserstoffe mit einem Siedepunkt von mindestens 175°C und bevorzugt einem Flammpunkt ≥ 60°C. Geeignete Kohlenwasserstoffe mit einem Flammpunkt ≥ 60°C umfassen beispielsweise n-Undecan (Flammpunkt 60°C, Siedepunkt 196°C) oder n-Dodecan (Flammpunkt 71 °C, Siedepunkt 216°C). Bevorzugt können technische Gemische von Kohlenwasserstoffen eingesetzt werden, beispielsweise Gemische paraffinischer Kohlenwasserstoffe, Gemische paraffinischer und naphtenischer Kohlenwasserstoffe oder Gemische von Isoparaffinen. Für den Fachmann ist klar, dass technische Gemische noch geringe Reste an aromatischen oder ungesättigten Kohlenwasserstoffen enthalten können. Der Gehalt an aromatischen und/oder ungesättigten Kohlenwasserstoffen sollte aber in der Regel < 1 Gew.-%, bevorzugt < 0,5 Gew.-% und besonders bevorzugt < 0,1 Gew.-% betragen. Technische Gemische gesättigter aliphatischer Lösemittel sind kommerziell erhältlich, beispielsweise technische Gemische der Shellsol^{®} D-Reihe oder der Exxsol^{®} D-Reihe.

Bei den Kohlenwasserstoffen kann es sich weiterhin um aromatische Lösemittel bzw. Lösemittelgemische handeln. In einer Ausführungsform der Erfindung handelt es sich bei den Kohlenwasserstoffen um Toluol bzw. ein Toluol umfassendes Lösemitelgemisch. In einer weiteren Ausführungsform handelt es sich um hochsiedende aromatische Kohlenwasserstoffe mit einem Siedepunkt von mindestens 175°C und bevorzugt einem Flammpunkt ≥ 60°C. Geeignete aromatische Kohlenwasserstoffe mit einem Flammpunkt ≥ 60°C umfassen beispielsweise Naphthalin. Bevorzugt können technische Gemische von aromatischen Kohlenwasserstoffen eingesetzt werden. Technische Gemische aromatischer Lösemittel sind kommerziell erhältlich, beispielsweise technische Gemische der Shellsol^{®} A-Reihe oder der Solvesso^{®} -Reihe.

Besonders vorteilhaft können Gemische aus aliphatischen Kohlenwasserstoffen mit einem Flammpunkt ≥ 60°C und aromatischen Kohlenwasserstoffen mit einem Flammpunkt ≥ 60°C eingesetzt werden.

### Radikalische Polymerisation

Die Durchführung radikalischer Polymerisationen ist dem Fachmann grundsätzlich bekannt. Die radikalische Polymerisation kann prinzipiell mittels einer Massepolymerisation durchgeführt werden, indem man die Monomere (A) in Gegenwart der Ethylen-Vinylester-Copolymere (B) und eines Initiators für die radikalische Polymerisation und in Abwesenheit von Lösemitteln polymerisiert. Einzelheiten hierzu sind in EP 486 836 A1, Seite 4, Zeilen 38 bis 46 beschrieben.

In einer bevorzugten Ausführungsform der Erfindung wird die Herstellung mittels einer Lösungspolymerisation vorgenommen. Es sind hierfür prinzipiell alle Lösungsmittel geeignet, in denen die Monomere (A), die Ethylen-Vinylacetat-Copolymere (B) sowie die gebildete polymere Zusammensetzung -auch in der gewünschten hohen Konzentration- ausreichend löslich bzw. zumindest homogen dispergiert vorliegen sind und die im Zuge der Polymerisation keine unerwünschten Reaktionen eingehen. Sie sollten insbesondere nicht selbst polymerisierbar sein und keine übermäßige Regelwirkung haben.

Bevorzugt handelt es sich bei den Lösemitteln um Kohlenwasserstoffe, bevorzugt um die oben beschriebenen aliphatischen und/oder aromatischen Kohlenwasserstoffe, insbesondere um solche mit einem Flammpunkt ≥ 60°C. Vorteilhaft wird bei einer solchen Vorgehensweise eine gebrauchsfertige, Lösemittel enthaltende, polymere Zusammensetzung erhalten, welche als Pour-Point-Depressant verwendet werden kann, ohne dass weitere Aufarbeitungsschritte nach der Polymerisation erforderlich sind.

Für die Polymerisation in Lösung wird zunächst eine Lösung der verwendeten Alkyl(meth)acrylate (A1a), der Alkyl(meth)acrylate (A1b), optional weiterer Monomere (A) und der Copolymere (B) im gewählten Lösemittel, bevorzugt in Kohlenwasserstoffen bereitgestellt. Bei dem Lösemittel kann es sich beispielsweise um Toluol handeln.

Das Lösen erfolgt durch intensives Vermischen der Komponenten, beispielsweise durch Rühren. Man kann beispielsweise zunächst die Monomere (A) lösen und dann der Lösung festes Ethylen-Vinylester-Copolymer (B) zugeben oder man kann zunächst Ethylen-Vinylester-Copolymere (B) lösen und die Monomere (A) zugeben. Das Lösen kann durch eine Erhöhung der Temperatur, beispielsweise auf ca. 50 bis 80°C beschleunigt werden.
In einer Variante der Erfindung kann man eine Lösung der Alkyl(meth)acrylate (A1a) in Kohlenwasserstoffen, bevorzugt aliphatischen Kohlenwasserstoffen mit einem Flammpunkt ≥ 60°C bereitstellen, indem man (Meth)acrylsäure mit Alkoholen R³OH in Kohlenwasserstoffen verestert und die erhaltene Lösung nach Mischung mit den weiteren Komponenten zur Polymerisation einsetzt. Die Veresterung kann nach dem Fachmann prinzipiell bekannten Methoden durchgeführt werden, beispielsweise nach den von EP 486 836 A1 beschriebenen Verfahren.

Die radikalische Polymerisation erfolgt unter Verwendung von thermisch zerfallenden Initiatoren für die radikalische Polymerisation. Naturgemäß werden die eingesetzten Initiatoren so gewählt, dass sie im Polymerisationsmedium löslich sind. Bevorzugte Polymerisationsinitiatoren umfassen öllösliche Azoverbindungen, insbesondere solche mit einer 10 h-Halbwertszeit von 50°C bis 70°C. Beispiele geeigneter Initiatoren umfassen Dimethyl-2,2'-azobis(2-methylpropionat) (10 h - Halbwertszeit ca. 66 °C), 2,2'-Azobis(2-methylbutyronitril) (10 h - Halbwertszeit ca. 67°C oder 2,2'-Azobis(2,4-dimethylvaleronitril) (10 h - Halbwertszeit ca. 51 °C). Derartige Initiatoren sind kommerziell erhältlich (Fa. Wako). Das Gewichtsverhältnis von Monomeren A zu den Initiatoren beträgt in der Regel etwa 100:1 bis 150:1, bevorzugt 125:1 bis 140:1. Es kann die Gesamtmenge der Initiatoren zu Beginn der Polymerisation vorhanden sein, bevorzugt gibt man aber den Initiator nach und nach zu. Die Zugabe kann portionsweise oder kontinuierlich, bevorzugt kontinuierlich erfolgen.

Weiterhin können in prinzipiell bekannter Art und Weise Molekulargewichtsregler zugegeben werden. Beispiele für Regler umfassen Alkohole wie Isopropanol, Allylalkohol oder Buten-2-ol, Thiole wie Ethanthiol oder Aldehyde wie Crotonaldehyd. Die Menge der Molekulargewichtsregler beträgt in der Regel 1 bis 4 Gew.-% bezüglich der Monomere (A), bevorzugt 2 bis 3 Gew.-% bezüglich der Monomere (A).

Die radikalische Polymerisation wird in prinzipiell bekannter Art und Weise durch Erwärmen des Reaktionsansatzes ausgelöst. Die Polymerisationstemperatur sollte oberhalb der 10 h-Halbwertszeit des Initiators liegen und beträgt in der Regel mindestens 50°C. Bewährt hat sich eine Polymerisationstemperatur von 50 bis 90°C. In der Regel wird die Polymerisation in prinzipiell bekannter Art und Weise unter einem Schutzgas wie Stickstoff oder Argon vorgenommen.

Die Polymerisation in Lösung kann vorgenommen werden, indem man die Lösung der Ausgangsstoffe in einem geeigneten -üblicherweise gerührten- Reaktionsgefäß vorlegt, wobei man zweckmäßigerweise auch schon das Lösen in der Apparatur durchführt. Die Konzentration der Monomere (A) in den Lösemitteln wird vom Fachmann entsprechend den gewünschten Eigenschaften der herzustellenden Mischung gewählt. In einer bevorzugten Ausführungsform der Erfindung beträgt die Konzentration 40 bis 80 Gew.-%, beispielsweise 45 Gew.-% bis 55 Gew.-%. Zur Lösung gibt man falls gewünscht einen oder mehrere Molekulargewichtsregler. Nach dem Erreichen der gewünschten Polymerisationstemperatur gibt man nach und nach eine Lösung des Polymerisationsinitiators zu dem zu polymerisierenden Gemisch. Die Dauer der Zugabe kann 0,5 h bis 10 h betragen, ohne dass die Erfindung auf diesen Bereich beschränkt sein soll. Nach der vollständigen Zugabe des Initiators sollte sich im Regelfalle noch eine Nachpolymerisationszeit anschließen. Diese kann beispielsweise 0,5 bis 5 h betragen. Man erhält eine Lösung der erfindungsgemäßen Polymermischung.

Mittels des beschriebenen Herstellverfahrens ist eine polymere Zusammensetzung erhältlich, bevorzugt eine polymere Zusammensetzung in Lösemitteln, bevorzugt Kohlenwasserstoffen. Die Polymerisation der Monomere (A) in Gegenwart der Ethylen-Vinylester-Copolymere (B) verhindert, dass sich die Polymerkomponenten in Lösung voneinander trennen. Das Ergebnis der Polymerisationsreaktion ist ein anderes, als wenn man die Monomere (A) -unter ansonsten gleichen Bedingungen- separat von den Ethylen-Vinylester-Copolymeren (B) polymerisiert und Lösungen eines Polymers aus den Monomeren (A) und eine Lösung der Ethylen-Vinylester-Copolymere (B) nach der Polymerisation vereinigt. Derartige Mischungen können wieder separieren.

Ohne dass wir an eine bestimmte Theorie gebunden sein möchten, kann dieser Effekt so erklärt werden, dass im Zuge der Polymerisation die Monomere (A) zumindest zum Teil auf das Ethylen-Vinylester-Copolymer (B) aufpfropfen. Ein weiterer Teil der Monomere kann polymerisieren ohne aufzupfropfen. Hierdurch entstehen Ethylen-Vinylester-Pfropfcopolymere mit Monomere (A) umfassenden Seitengruppen und Monomere (A) umfassende Homo- oder Copolymere. Das teilweise Pfropfen verhindert in prinzipiell bekannter Art und Weise, dass sich die beiden Polymerkomponenten trennen. Es ist aber auch möglich, dass keine maßgebliche Pfropfung eintritt, sondern dass sich ein "interjacent complex" aus den Ethylen-Vinylester-Copolymeren (B) und den Homo- oder Copolymeren aus Monomeren (A) bildet. In einem solchen Komplex sind die Polymere überwiegend physikalisch gebunden und dennoch stabil, wie beispielsweise in US 7,001,903 B2 beschrieben.

### Verwendung der Formulierungen als Pour-Point-Depressants

Die erhaltenen polymeren Zusammensetzungen, insbesondere polymere Zusammensetzungen in Kohlenwasserstoffen, bevorzugt solche mit einem Flammpunkt ≥ 60°C können erfindungsgemäß als Pour-Point-Depressants für Rohöl, Mineralöl und/oder Mineralölprodukte verwendet werden, indem man dem Rohöl, dem Mineralöl und/oder den Mineralölprodukten mindestens eine der geschilderten Polymerformulierungen zusetzt. Daneben können selbstverständlich noch weitere Formulierungen, welche als Pour-Point-Depressants wirken, eingesetzt werden.

Pour-Point-Depressants verringern den Pour-Point von Rohölen, Mineralölen und/oder Mineralölprodukten. Als "Pour-Point" ("Fließgrenze") wird die niedrigste Temperatur bezeichnet, bei der eine Probe eines Öls beim Abkühlen gerade noch fließt. Für die Messung des Pour-Points werden standardisierte Messverfahren eingesetzt.

Zur erfindungsgemäßen Verwendung kann die polymere Zusammensetzung als solche eingesetzt werden.

Bevorzugt werden aber Formulierungen der polymeren Zusammensetzungen in geeigneten Lösemitteln eingesetzt, welche neben den Lösemitteln noch weiteren Komponenten enthalten können.
Es kann ein Konzentrat eingesetzt werden, beispielsweise ein Konzentrat mit einem Gesamt-Polymergehalt von 50 Gew.-% bis 80 Gew.-% in Lösemittel. Ein derartiges Konzentrat kann mittels des oben genannten Verfahrens hergestellt werden. Es kann aber auch noch mit weiterem Lösemittel verdünnt werden, bevorzugt mit aliphatischen und/oder aromatischen Kohlenwasserstoffen und/oder mit weiteren Komponenten formuliert werden.

Beispielsweise kann man der Formulierung zusätzliche Wachs-Dispergatoren zusetzen. Wachs-Dispergatoren stabilisieren gebildete Paraffin-Kristalle und verhindern, dass diese sedimentieren. Als Wachs-Dispergatoren können beispielsweise Alkylphenole, Alkylphenol-FormaldehydHarze oder Dodecylbenzolsulfonsäure eingesetzt werden. Die Konzentration einer einsatzfähigen Formulierung kann beispielsweise 20 bis 50 Gew.-%, bevorzugt 25 bis 40 Gew.-% an erfindungsgemäß hergestellten Polymeren sowie optional weiteren Komponenten mit Ausnahme der Lösemittel betragen, wobei sich diese Angabe auf die Gesamtmenge aller Komponenten einschließlich der Lösemittel bezieht. Während die Herstellung der Formulierungen naturgemäß üblicherweise in einer Chemieanlage erfolgt, kann die Herstellung der einsatzfertigen Formulierung vorteilhaft vor Ort erfolgen, also beispielsweise direkt an einer Förderstelle für Öl.

Die erfindungsgemäße Verwendung erfolgt, indem man die erfindungsgemäßen polymeren Zusammensetzungen oder die polymeren Zusammensetzungen enthaltenden Formulierungen dem Rohöl, dem Mineralöl und/oder den Mineralölprodukten, bevorzugt dem Rohöl zusetzt.

Es ist der Vorteil der erfindungsgemäßen polymeren Zusammensetzung, welche unter Verwendung einer Kombination von mindestens einem Alkyl(meth)acrylat (A1a) und mindestens einem Alkyl(meth)acrylat (A1b) hergestellt werden, dass deren Lösungen in Kohlenwasserstoffen auch bei Raumtemperatur noch bei einer Konzentration von ca. 45 Gew.-% bis 70 Gew.-% flüssig sind. Derartige Konzentrate können verwendet werden, ohne dass ein Aufschmelzen der Konzentrate vor der Verwendung erforderlich ist. Dies erleichtert die Arbeit mit den Produkten ganz erheblich.

Die Formulierungen werden üblicherweise in einer solchen Menge eingesetzt, dass die zugesetzte Menge der polymeren Zusammensetzung 50 bis 1500 ppm bzgl. des Öls beträgt. Bevorzugt beträgt die Menge 100 bis 1000 ppm, besonders bevorzugt 250 bis 600 ppm und beispielsweise 300 bis 600 ppm. Die Mengen beziehen sich auf die polymere Zusammensetzung selbst ohne Berücksichtigung eventuell vorhandener Lösemittel sowie optional weiterer Komponenten der Formulierung.

In einer bevorzugten Ausführungsform der Erfindung handelt es sich um Rohöl und man injiziert die Formulierung in eine Rohölpipeline. Bevorzugt kann die Injektion auf dem Ölfeld erfolgen, d.h. am Beginn der Rohölpipeline, aber die Injektion kann selbstverständlich auch an einem anderen Ort erfolgen. Insbesondere kann es sich um eine Pipeline handeln, welche von einer Offshore-Plattform ans Festland führt. Explosionsschutz ist auf Offshore-Plattformen und in Raffinerien besonders wichtig, und dementsprechend vereinfachen die erfindungsgemäßen Formulierungen auf Basis von Lösemitteln mit einem Flammpunkt ≥ 60°C die Handhabung ganz erheblich. Weiterhin erfolgt die Abkühlung von Rohöl in Pipelines, welche unter Wasser von einer Offshore-Plattform an Land führen, naturgemäß besonders schnell, insbesondere, wenn es sich um Pipelines in kalten Gewässern handelt, beispielsweise mit einer Wassertemperatur von weniger als 10°C.

In einer weiteren bevorzugten Ausführungsform der Erfindung handelt es sich um Rohöl und man injiziert die Formulierung in eine Produktionsbohrung. Auch hier kann es sich insbesondere um eine auf eine Offshore-Plattform führende Produktionsbohrung handeln. Die Injektion erfolgt bevorzugt etwa an der Stelle, an der Öl aus der Formation in die Produktionsbohrung einfließt. Auf diese Art und Weise kann man das Erstarren des Rohöls in der Produktionsbohrung oder eine zu starke Erhöhung von dessen Viskosität verhindern.

### Weitere Verwendungen der Formulierungen

Die erfindungsgemäße polymere Zusammensetzung kann selbstverständlich auch zu anderen Zwecken verwendet werden.

In einer weiteren Ausführungsform der Erfindung werden die oben geschilderten polymeren Zusammensetzungen, insbesondere Formulierungen in Lösemitteln, insbesondere Kohlenwasserstoffen zur Vermeidung von Wachsablagerungen auf Oberflächen, welche in Kontakt mit Rohöl, Mineralöl und/oder Mineralölprodukten sind, verwendet. Die Verwendung erfolgt, indem man dem Rohöl, Mineralöl und/oder den Mineralölprodukten mindestens eine der oben geschilderten Polymerformulierungen zusetzt. Bevorzugte Formulierungen wurden bereits genannt und auch die Art des Einsatzes ist analog zu der Verwendung als Pour-Point-Depressant. Neben den erfindungsgemäßen Formulierungen können selbstverständlich noch weitere Formulierungen, welche als Wachs-Inhibitoren wirken, eingesetzt werden.

Die folgenden Beispiele sollen die Erfindung näher illustrieren:

### A Herstellung der Polymermischungen

### Eingesetzte Ausgangsmaterialien:

| | |
|---|---|
| Ethylen-Vinylacetat-Copolymer | Ethylen-Vinylacetat-Copolymer aus 67 Gew.-%Ethylen und 33 Gew.-%Vinylacetat, Schmelzflussindex 21 g/10 min (gemessen nach ASTM D 1238), Mₙ ca. 34000 g/mol, M_{w} ca. 134000 g/mol. |
| Wako V-601 | Dimethyl-2,2'-azoisobutyrat, 10 h - Halbwertszeit ca. 66°C (in Toluol) |
| Behenylacrylat | Technische Mischung von C₁₈-, C₂₀-und C₂₂-Acrylaten mit linearem Alkyrest, 40 bis 55 Gew.-%C₁₈-Acrylat, max. 15 Gew.-%C₂₀-Acrylat und 35 bis 45 Gew.-%C₂₂-Acrylat |
| Butylactylat | |
| t-Butylacrylat | |
| 2-Proypylheptylacrylat | |
| 2-Proypylheptylmethacrylat | |
| Cyclohexylmethacrylat | |
| i-Tridecylacrylat | Acrylat mit einem verzweigtem Tridecylrest , der Rest weist durchschnittlich ca. 3 Verzweigungen auf. |
| i-Heptadecylacrylat | Acrylat mit einem verzweigtem Heptadecylrest, der Rest weist durchschnittlich ca. 3 Verzweigungen auf. |
| i-Nonylacrylat | Acrylat mit einem Nonylrest, der Rest ist ein Gemisch verschiedener Isomere |
| 2-Hyd roxyethylacrylat | |
| Hydroxypropylacrylat | |
| Polypropylenglykolmonoacrylat | Acrylat mit Polypropylenrest mit durchschnittlich 6 Propylenoxideinheiten |
| C_{16/18}-O-(EO)₁₁-methacrylat | Methcrylat aus einem C_{16/18}-Fettalkohol (Gemisch aus n-Hexadecanol (ca. 30%) und n-Octadecanol (ca. 70%), welcher mit durchschnittlich 11 Ethylenoxideinheiten alkoxyliert ist. |
| Phenoxyethylacrylat | H₂C=CH-COO-CH₂-CH₂O-C₆H₅ |
| Isobornylacrylat | 2-(1,7,7-Trimethylbicyclo[2.2.1]heptyl)acrylat |
| | 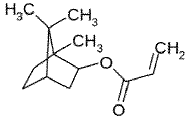 |

### Versuchsvorschrift für Beispiel 3 in Tabelle 1:

Copolymer aus 80:20 (wt/wt) Behenylacrylat / 2-Propylheptylacrylat

In einem Vierhalskolben mit Teflonrührer, Intensivkühler und Dosimat werden 216,8 g Behenylacrylat und 54,2 g Propylheptylacrylat in 217 g Toluol bei 75 °C gelöst, dann werden unter Rühren 66,4 g des oben genannten Ethylen-Vinylacetat-Copolymers zugegeben und gelöst. Bei 78 - 80 °C werden 8,2 g Allylalkohol in 3,2 g Toluol, danach 1,15 g des Initiators Dimethyl-2,2'-azoisobutyrat (Wako V-601) gelöst in 31,4 g Toluol über 4 Stunden zudosiert. Nach 2,5 Stunden Nachpolymerisation bei 82 °C wird mit 106,3 g Toluol verdünnt und auf 40 °C gekühlt, bevor 0,42 g Triethanolamin zugegeben werden. Nach weiteren 30 min Rühren wird über ein 280 µm-Schnellsieb filtriert.

Die erhaltene Lösung wies eine Konzentration von 48 Gew.-% der polymeren Zusammensetzung auf.

Weitere Beispiele sowie die Vergleichsbeispiele wurden gemäß der gleichen Vorschrift durch-geführt, nur wurden die Art des 2. Acrylats und das Mengenverhältnis von Behenylacrylat zum 2. Acrylat verändert. Die gewählten Monomere und Mengenverhältnisse sind jeweils in Tabelle 1 zusammengestellt. Die erhaltene Konzentration der polymeren Zusammensetzung betrug bei allen Versuchen 48 Gew.-%.

### B Test der Eigenschaften der erhaltenen polymeren Zusammensetzungen

Mit den erhaltenen Lösungen der Copolymere wurden jeweils die folgenden Tests durchgeführt:

### Bestimmung der K-Werte der Copolymere

Von den erhaltenen Copolymeren wurden die K-Werte (gemessen nach H. Fikentscher, Cellulosechemie Band 13, Seiten 58 bis 64 und 71 bis 74 (1932)) in 2 %iger (Gew./Vol.) toluolischer Lösung bestimmt. Die Werte sind in den Tabelle 1 zusammengestellt.

### Molekulargewichtsbestimmung

Es wurde jeweils das zahlenmittlere Molekulargewicht Mₙ und das gewichtsmittlere Molekulargewicht M_{w} der erhaltenen Copolymere mittels Gelpermeationschromatographie in Tetrahydrofuran als Lösemittel bestimmt. Die Werte sind in den Tabelle 1 zusammengestellt.

### Bestimmung der Viskosität:

Es wurde jeweils die kinematische Viskosität der in den oben beschriebenen Versuchen erhaltenen Lösungen der Pfropfcopolymere mit einem Ubbelohde-Viskosimeter bei 50°C gemessen. Die Werte sind in den Tabelle 1 zusammengestellt.

### Beurteilung der Stabilität

Es wurde jeweils die Stabilität der Polymerlösung bestimmt, und zwar im Hinblick darauf, ob eine langfristig stabile Lösung erhalten bleibt, welche nicht zur Phasentrennung neigt. Hierzu wurden die hergestellten Formulierungen nach der Synthese bei Raumtemperatur gelagert. Zeigt sich innerhalb von 24 h nach Beginn der Lagerung eine erkennbare Phasentrennung, dann ist die Bewertung negativ (-), ansonsten (+). Die Werte sind in den Tabelle 1 zusammengestellt.

### Bestimmung des Pour-Points

Die Bestimmung des Pour-Points wurde gemäß ASTM D 5853 "Test Method for Pour Point of Crude Oils" durchgeführt. Der Pour-Point ist die minimale Temperatur, bei der eine Probe eines getesteten Öls gerade noch fließfähig ist. Gemäß der ASTM D 5853 wird hierzu eine Probe des Öls in Schritten von jeweils 3°C abgekühlt und nach jedem Schritt jeweils die Fließfähigkeit getestet. Für die Tests wurde ein Rohöl aus dem Ölfeld "Landau" in Südwestdeutschland (Firma Wintershall Holding GmbH) mit einem API-Grad von von 37 und einem Pour-Point von 27°C verwendet. Zur Bestimmung der Erniedrigung des Pour-Points wurden die zu testenden Propfcopolymere dem Öl in einer Konzentration von 100 ppm, 300 ppm oder 1500 ppm, jeweils Polymer bezogen auf das Rohöl eingesetzt. Die Werte sind in den Tabelle 1 zusammengestellt.

Von manchen Proben wurden Doppel- oder Dreifachbestimmungen durchgeführt. In diesen Fällen sind in der Tabelle alle Messwerte angegeben.

**Tabelle 1: Ergebnisse der Beispiele und Vergleichsbeispiele**

| **Nr.** | **2. Acrylat** | **Behenylacrylat / 2. Acrylat** | | **Viskosität bei 50°C [mm²/s]** | **Stabilität bei RT** | **Mₙ M_{w} [g/mol]** | **K-Wert** | **Pour-Point [°C] Mengen der Additive** | | |
|---|---|---|---|---|---|---|---|---|---|---|
| | | **Massenverhältnis** | **Molares Verhältnis** | | | | | **100 ppm** | **300 ppm** | **1500 ppm** |
| V1 | - | 100 / 0 | 100 / 0 | + 179 | - fest | 2230 57000 | | 6/6/9 | 3/0/3 | 9/6/6 |
| 5 | n-Butylacrylat | 90 / 10 | 77 / 23 | 269 | + flüssig | 7330 10600 | 41,3 | 6/9/12 | 6/6/6 | 9/0/9 |
| 6 | n-Butylacrylat | 80 / 20 | 60 / 40 | 315 | + flüssig | 8290 132000 | 43,3 | 12/12 | 9/6/3 | 9/6/9 |
| 7 | tert-Butylacrylat | 90 / 10 | 77 / 23 | 258 | + flüssig | 7110 102000 | 40,2 | 12/12/12 | 6/3/9/6 | 12/12/9 |
| 8 | tert-Butylacrylat | 85 / 15 | 67 / 33 | 296 | flüssig | 6930 107800 | 42,8 | 6/9 | 6/6 | 9/6 |
| 9 | tert-Butylacrylat | 80 / 20 | 60 / 40 | 324 | + flüssig | 8280 130000 | 43,2 | 6/6/-3 | 3/0/9 | 0/6/0 |
| 10 | tert-Butylacrylat | 75 / 25 | 52 / 48 | 341 | + flüssig | 7920 123700 | 44,8 | 6/9 | 9/9 | 3/3 |
| V3 | tert-Butylacrylat | 50 / 50 | 27 / 73 | 218 | + flüssig | 14640 219800 | 47,2 | 27/24 | 27/27 | 24/24 |
| 1 | 2-Propylheptylacrylat | 90 / 10 | 85 / 15 | + 163 | + flüssig | 4170 65300 | 36,7 | 6/6/9 | 6/0/6 | 0/9/6 |
| 2 | 2-Propylheptylacrylat | 85 / 15 | 77 / 23 | + 296 | + flüssig | 6100 110800 | 42,4 | 9/9 | 6/6 | 6/6 |
| 3 | 2-Propylheptylacrylat | 80 / 20 | 71 / 29 | + 227 | + flüssig | 9700 95800 | 39,2 | 6/6 | 6/3/3 | 6/3/-3 |

**Tabelle 1 (Forts.): Ergebnisse der Beispiele und Vergleichsbeispiele**

| **Nr.** | **2. Acrylat** | **Behenylacrylat / 2. Acrylat** | | **Viskosität bei 50°C [mm²/s]** | **Stabilität bei RT** | **Mₙ M_{w} [g/mol]** | **K-Wert** | **Pour-Point [°C] Mengen der Additive** | | |
|---|---|---|---|---|---|---|---|---|---|---|
| | | **Massenverhältnis** | **Molares Verhältnis** | | | | | **100 ppm** | **300 ppm** | **1500 ppm** |
| 4 | 2-Propylheptylacrylat | 75 / 25 | 64 / 36 | + 223 | + flüssig | 7500 79800 | 39,4 | 3/6 | 3/3 | 6/6 |
| V2 | 2-Propylheptylacrylat | 50 / 50 | 38 / 62 | + 211 | + flüssig | 10900 90900 | 38,8 | 12/9/9 | 12/9/9 | 6/6 |
| 11 | 2-Propylheptylmethacrylat | 90 / 10 | 85/14 | 227 | - gelartig | 5590 87700 | 40 | 9/9 | 9/9 | 12/6 |
| 12 | 2-Propylheptylmethacrylat | 80 / 20 | 72 / 28 | 283 | + flüssig | 6030 104000 | 40,8 | 9/6 | 6/6 | 6/6 |
| 13 | i-Nonanolacrylat | 90/10 | 84/16 | 232 | + flüssig | 6290 88030 | 39,2 | 6/9 | 0/3 | 9/9 |
| 14 | i-Nonanolacrylat | 80/20 | 71/29 | 237 | + flüssig | 6740 92000 | 39,6 | 6/9 | 3/3 | 9/9 |
| 15 | i-Tridecylacrylat | 90/10 | 87/13 | 222 | + flüssig | 5640 81600 | 38,2 | 9/9 | 6/6 | 9/9 |
| 16 | i-Tridecylacrylat | 80/20 | 75 / 25 | 220 | + flüssig | 6940 83000 | 39,0 | 9/9 | 9/9 | 15/18 |
| 17 | i-Heptadecylacrylat | 90/10 | 89 / 11 | 197 | + flüssig | 4980 78300 | 39,7 | 6/9 | 3/6 | 6/6 |
| 18 | i-Heptadecylacrylat | 80/20 | 78 / 22 | 302 | + flüssig | 5450 89390 | 40,3 | 9/9 | 6/6 | 6/6 |
| 19 | Cyclohexylmethacrylat | 75/25 | 59/41 | 743 | + flüssig | 9490 199000 | 47,3 | 3/3 | -3/-3 | 0/0 |
| 20 | Isobornylacrylat | 80/20 | 70/30 | 244 | + flüssig | 7350 80100 | 38 | 9/9 | 6/6 | 9/12 |

**Tabelle 1 (Forts.): Ergebnisse der Beispiele und Vergleichsbeispiele**

| **Nr.** | **2. Acrylat** | **Behenylacrylat / 2. Acrylat** | | **Viskosität bei 50°C [mm²/s]** | **Stabilität bei RT** | **Mₙ M_{w} [g/mol]** | **K-Wert** | **Pour-Point [°C] Mengen der Additive** | | |
|---|---|---|---|---|---|---|---|---|---|---|
| | | **Massenverhältnis** | **Molares Verhältnis** | | | | | **100 ppm** | **300 ppm** | **1500 ppm** |
| V4 | 2-Hydroxyethylacrylat | 90 / 10 | 75 / 25 | 237 | - | 7270 | 39,5 | 18/12 | 12/12 | 12/9 |
| | | | | | fest | 98200 | | | | |
| V5 | 2-Hydroxyethylacrylat | 80 / 20 | 57 / 43 | 470 | - | 7890 | 37,5 | 12/12 | 6/12 | 12/15 |
| | | | | | fest | 79400 | | | | |
| V6 | Hydroxypropylacrylat | 90 / 10 | 79/21 | 212 | - | 6320 | 40,3 | 9/12 | 6/6 | 6/12 |
| | | | | | fest | 92800 | | | | |
| V7 | Polypropylenglykolmonoacrylat | 90 / 10 | 92/8 | 245 | - | 5460 | 39,5 | 9/9 | 6/6 | 9/9 |
| | | | | | fest | 95760 | | | | |
| V8 | Polypropylenglykolmonoacrylat | 80 / 20 | 83/17 | 397 | - | 6770 | 40,5 | 6/6 | 6/6 | 9/6 |
| | | | | | fest | 174500 | | | | |
| V9 | C_{16/18}-O-(EO)₁₁-methacrylat | 90/10 | 95/5 | 205 | - | 7055 | 37,7 | 12/12 | 6/6 | 9/9 |
| | | | | | fest | 107800 | | | | |
| V10 | C_{16/18}-O-(EO)₁₁-methacrylat | 80/20 | 90/10 | 212 | - | 7225 | 37,8 | 12/12 | 6/9 | 3/0 |
| | | | | | zähflüssig | 180100 | | | | |
| V11 | Phenoxyethylacrylat | 90/10 | 83/17 | 274 | - | 8350 | 40,1 | 9/9 | 3/3 | 6/9 |
| | | | | | fest | 92500 | | | | |

Die Beispiele und Vergleichsbeispiele zeigen, dass sich unter Verwendung weiterer Alkyl(meth)acrylate (A1b) neben Behenylacrylat polymere Zusammensetzungen erhalten lassen, die auch noch als Konzentrate (48 Gew.-% polymere Zusammensetzung) in toluolischer Lösung flüssig sind. Die nur Behenylacrylat umfassende Polymermischung ist in toluolischer Lösung unter den gleichen Bedingungen fest.

Es wirken aber nicht alle Alkyl(meth)acrylate gleichermaßen gut. Wirkung zeigen Alkyl(meth)acrylate mit verzweigten Alkylresten oder solche mit kürzeren, linearen Alkylresten. Die Verwendung OH-Gruppen oder Ethergruppen umfassender Acrylate führt nicht zu flüssigen Produkten, sondern zu festen Produkten. Ebenso verschlechtern sich bei Anteilen von mehr als 50 mol % der Monomere (A1 b) die anwendungstechnischen Eigenschaften der Polymermischungen als Pour-Point-Depressants ganz erheblich. Eine 73 mol % t-Butylacrylat enthaltende polymere Zusammensetzung ist zwar flüssig, hat aber keinerlei Wirkung mehr als Pour-Point-Depressant.

Eine ganz ausgezeichnete Wirkung als Pour-Point-Depressant ließ sich in Versuch 19 erhalten. Zur Herstellung des Polymers wurde eine Monomerenmischung aus 75 Gew. % Behenylacrylat und 25 Gew. % Cyclohexylmethacrylat erhalten.

## Patentansprüche

1. Polymere Zusammensetzung erhältlich durch radikalische Polymerisation mono-ethylenisch ungesättigter Monomere (A) in Gegenwart mindestens eines Ethylen-Vinylester-Copolymers (B), wobei
▪ die Monomere (A) mindestens 70 Gew.-% Alkyl(meth)acrylate (A1) bezogen auf die Menge aller Monomere (A) umfassen,
▪ die Ethylen-Vinylester-Copolymere (B) 55 bis 85 Gew.-% Ethylen sowie 15 bis 45 Gew.-% Vinylester der allgemeinen Formel H₂C=CH-O-(O)C-R¹ (III) umfassen, wobei R¹ für H oder einen C₁- bis C₄ Kohlenwasserstoffrest steht, und
▪ die Menge der Monomere (A) 70 bis 90 Gew.-% und die der Ethylen-Vinylester-Copolymere (B) 10 bis 30 Gew.-% bezogen auf die Summe der Monomere (A) und der Ethylen-Vinylester-Copolymere (B) zusammen beträgt,
**dadurch gekennzeichnet, dass** es sich bei den Alkyl(meth)acrylaten (A1) um eine Mischung aus
(A1a) 50 bis 99 mol % mindestens eines Alkyl(meth)acrylats (A1a) der allgemeinen Formel H₂C=C(R²)-COOR³ handelt, wobei R² für H oder eine Methylgruppe und R³ für einen linearen Alkylrest mit 18 bis 24 Kohlenstoffatomen steht, und
(A1b) 1 bis 49 mol % mindestens eines Alkyl(meth)acrylats (A1b) der allgemeinen Formel H₂C=C(R²)-COOR⁴, wobei R² die bereits definierte Bedeutung hat und R⁴ für einen Kohlenwasserstoffrest ausgewählt aus der Gruppe von Resten R^{4a}, R^{4b} und R^{4c} steht und die Reste wie folgt definiert sind:
R^{4a}: Lineare Alkylreste mit 1 bis 11 Kohlenstoffatomen,
R^{4b}: Verzweigte Alkylreste mit 4 bis 60 Kohlenstoffatomen, und
R^{4c}: Cyclische Alkylreste mit 5 bis 20 Kohlenstoffatomen,
mit der Maßgabe, dass die Summe der Mengen von (A1 a) und (A1 b) 100 mol % ergibt.

2. Polymere Zusammensetzung gemäß Anspruch 1, **dadurch gekennzeichnet, dass** es sich bei R^{4a} um einen linearen Alkylrest mit 2 bis 6 Kohlenstoffatomen handelt.

3. Polymere Zusammensetzung gemäß Anspruch 1 oder 2, **dadurch gekennzeichnet, dass** es sich bei R^{4b} um einen verzweigten Alkylrest mit 4 bis 30 Kohlenstoffatomen handelt.

4. Polymere Zusammensetzung gemäß Anspruch 1, **dadurch gekennzeichnet, dass** es sich bei R^{4b} um einen verzweigten Alkylrest mit 4 bis 17 Kohlenstoffatomen handelt. 21.01.2016

5. Polymere Zusammensetzung gemäß Anspruch 1, **dadurch gekennzeichnet, dass** es sich bei R^{4c} um einen cyclischen Alkylrest mit 6 bis 10 Kohlenstoffatomen handelt.

6. Polymere Zusammensetzung gemäß einem der Ansprüche 1 bis 5, **dadurch gekennzeichnet, dass** das mittlere Molekulargewicht M_{w} der eingesetzten Ethylen-Vinylester-Copolymere mindestens 30000 g/mol beträgt.

7. Polymere Zusammensetzung gemäß einem der Ansprüche 1 bis 6, **dadurch gekennzeichnet, dass** die Ethylen-Vinylester-Copolymere (B) 55 bis 75 Gew.-% Ethylen sowie 25 bis 40 Gew.-% Vinylester umfassen.

8. Polymere Zusammensetzung gemäß einem der Ansprüche 1 bis 6, **dadurch gekennzeichnet, dass** die Ethylen-Vinylester-Copolymere (B) 60 bis 75 Gew.-% Ethylen sowie 25 bis 40 Gew.-% Vinylester umfassen.

9. Polymere Zusammensetzung gemäß einem der Ansprüche 1 bis 8, **dadurch gekennzeichnet, dass** die Menge der Monomere (A) 75 bis 85 Gew.-% und die der Ethylen-Vinylester-Copolymere (B) 15 bis 25 Gew.-% bezogen auf die Summe aus Monomeren (A) und Ethylen-Vinylester-Copolymeren (B) beträgt.

10. Polymere Zusammensetzung gemäß einem der Ansprüche 1 bis 9, **dadurch gekennzeichnet, dass** die polymere Zusammensetzung weiterhin Kohlenwasserstoffe als Lösemittel umfasst.

11. Polymere Zusammensetzung gemäß Anspruch 10, **dadurch gekennzeichnet, dass** die Kohlenwasserstoffe einen Flammpunkt ≥ 60°C aufweisen.

12. Polymere Zusammensetzung gemäß Anspruch 10 oder 11, **dadurch gekennzeichnet, dass** die Konzentration der polymeren Zusammensetzung im Lösemittel 20 bis 80 Gew.-% bezüglich der Summe aller Komponenten der Mischung beträgt.

13. Verwendung einer polymeren Zusammensetzung gemäß einem der Ansprüche 1 bis 12 als Pour-Point-Depressant für Rohöl, Mineralöl und/oder Mineralölprodukte, indem man dem Rohöl, dem Mineralöl und/oder den Mineralölprodukten mindestens eine polymere Zusammensetzung gemäß einem der Ansprüche 1 bis 12 zusetzt.

14. Verwendung gemäß Anspruch 13, **dadurch gekennzeichnet, dass** die eingesetzte polymere Zusammensetzung Kohlenwasserstoffe als Lösemittel umfasst.

15. Verwendung gemäß Anspruch 14, **dadurch gekennzeichnet, dass** die Kohlenwasserstoffe einen Flammpunkt ≥ 60°C aufweisen.

16. Verwendung gemäß einem der Ansprüche 13 bis 15, **dadurch gekennzeichnet, dass** die eingesetzte polymere Zusammensetzung zusätzlich mindestens einen Wachsdispergator umfasst.

17. Verwendung gemäß Anspruch 13 bis 16, **dadurch gekennzeichnet, dass** die zugesetzte Menge 50 bis 1500 ppm der polymeren Zusammensetzung bzgl. des Öls beträgt.

18. Verwendung gemäß einem der Ansprüche 13 bis 17, **dadurch gekennzeichnet, dass** es sich um Rohöl handelt und man die Formulierung in eine Rohölpipeline injiziert.

19. Verwendung gemäß einem der Ansprüche 13 bis 17, **dadurch gekennzeichnet, dass** es sich um Rohöl handelt und man die Formulierung in eine Produktionsbohrung injiziert.

20. Verwendung gemäß einem der Ansprüche 18 oder 19, **dadurch gekennzeichnet, dass** die Injektion auf einer Offshore-Plattform erfolgt.

21. Verwendung einer polymeren Zusammensetzung gemäß einem der Ansprüche 1 bis 12 zur Vermeidung von Wachsablagerungen auf Oberflächen, welche in Kontakt mit Rohöl, Mineralöl und/oder Mineralölprodukten sind, indem man dem Rohöl, dem Mineralöl und/oder den Mineralölprodukten mindestens eine Formulierung gemäß einem der Ansprüche 1 bis 12 zusetzt.

## Claims

1. A polymeric composition obtainable by free-radical polymerization of monoethylenically unsaturated monomers (A) in the presence of at least one ethylene-vinyl ester copolymer (B),
▪ the monomers (A) comprising at least 70% by weight of alkyl (meth)acrylates (A1) based on the amount of all monomers (A),
▪ the ethylene-vinyl ester copolymers (B) comprising 55 to 85% by weight of ethylene and 15 to 45% by weight of vinyl esters of the general formula H₂C=CH-O-(O)C-R¹ (III) where R¹ is H or a C₁- to C₄ hydrocarbyl radical, and
▪ the amount of the monomers (A) being 70 to 90% by weight and that of the ethylene-vinyl ester copolymers (B) 10 to 30% by weight based on the sum of the monomers (A) and the ethylene-vinyl ester copolymers (B) together,
wherein the alkyl (meth)acrylates (A1) are a mixture of
(A1a) 50 to 99 mol% of at least one alkyl (meth)acrylate (A1a) of the general formula H₂C=C(R²)-COOR³ where R² is H or a methyl group and R³ is a linear alkyl radical having 18 to 24 carbon atoms, and
(A1b) 1 to 49 mol% of at least one alkyl (meth)acrylate (A1b) of the general formula H₂C=C(R²)-COOR⁴ where R² is as already defined and R⁴ is a hydrocarbyl radical selected from the group of R^{4a}, R^{4b} and R^{4c} radicals and the radicals are each defined as follows:
R^{4a}: linear alkyl radicals having 1 to 11 carbon atoms,
R^{4b}: branched alkyl radicals having 4 to 60 carbon atoms, and
R^{4c}: cyclic alkyl radials having 5 to 20 carbon atoms,
with the proviso that the sum of the amounts of (A1a) and (A1b) adds up to 100 mol%.

2. The polymeric composition according to claim 1, wherein R^{4a} is a linear alkyl radical having 2 to 6 carbon atoms.

3. The polymeric composition according to claim 1 or 2, wherein R^{4b} is a branched alkyl radical having 4 to 30 carbon atoms.

4. The polymeric composition according to claim 1, wherein R^{4b} is a branched alkyl radical having 4 to 17 carbon atoms.

5. The polymeric composition according to claim 1, wherein R^{4c} is a cyclic alkyl radial having 6 to 10 carbon atoms.

6. The polymeric composition according to any of claims 1 to 5, wherein the mean molecular weight M_{w} of the ethylene-vinyl ester copolymers used is at least 30 000 g/mol.

7. The polymeric composition according to any of claims 1 to 6, wherein the ethylene-vinyl ester copolymers (B) comprise 55 to 75% by weight of ethylene and 25 to 40% by weight of vinyl esters.

8. The polymeric composition according to any of claims 1 to 6, wherein the ethylene-vinyl ester copolymers (B) comprise 60 to 75% by weight of ethylene and 25 to 40% by weight of vinyl esters.

9. The polymeric composition according to any of claims 1 to 8, wherein the amount of the monomers (A) is 75 to 85% by weight and that of the ethylene-vinyl ester copolymers (B) 15 to 25% by weight based on the sum of monomers (A) and ethylene-vinyl ester copolymers (B).

10. The polymeric composition according to any of claims 1 to 9, which further comprises hydrocarbons as solvents.

11. The polymeric composition according to claim 10, wherein the hydrocarbons have a flashpoint ≥ 60°C.

12. The polymeric composition according to claim 10 or 11, wherein the concentration of the polymeric composition in the solvent is 20 to 80% by weight based on the sum of all components of the mixture.

13. The use of a polymeric composition according to any of claims 1 to 12 as a pour point depressant for crude oil, mineral oil and/or mineral oil products, by adding at least one polymeric composition according to any of claims 1 to 12 to the crude oil, mineral oil and/or mineral oil products.

14. The use according to claim 13, wherein the polymeric composition used comprises hydrocarbons as solvents.

15. The use according to claim 14, wherein the hydrocarbons have a flashpoint ≥ 60°C.

16. The use according to any of claims 13 to 15, wherein the polymeric composition used additionally comprises at least one wax dispersant.

17. The use according to claims 13 to 16, wherein the amount added is 50 to 1500 ppm of the polymeric composition based on the oil.

18. The use according to any of claims 13 to 17, wherein the oil is crude oil and the formulation is injected into a crude oil pipeline.

19. The use according to any of claims 13 to 17, wherein the oil is crude oil and the formulation is injected into a production well.

20. The use according to either of claims 18 and 19, wherein the injection is effected on an offshore platform.

21. The use of a polymeric composition according to any of claims 1 to 12 for prevention of wax deposits on surfaces in contact with crude oil, mineral oil and/or mineral oil products, by adding at least one formulation according to any of claims 1 to 12 to the crude oil, mineral oil and/or mineral oil products.

## Revendications

1. Composition polymère pouvant être obtenue par polymérisation radicalaire de monomères monoéthyléniquement insaturés (A) en présence d'au moins un copolymère d'éthylène-ester de vinyle (B),
- les monomères (A) comprenant au moins 70 % en poids de (méth)acrylates d'alkyle (A1) par rapport à la quantité de tous les monomères (A),
- les copolymères d'éthylène-ester de vinyle (B) comprenant 55 à 85 % en poids d'éthylène et 15 à 45 % en poids d'ester de vinyle de formule générale H₂C=CH-O-(O)C-R¹ (III), dans laquelle R¹ représente H ou un radical hydrocarboné en C₁ à C₄, et
- la quantité des monomères (A) étant de 70 à 90 % en poids et celle des copolymères d'éthylène-ester de vinyle (B) étant de 10 à 30 % en poids, par rapport à la somme des monomères (A) et des copolymères d'éthylène-ester de vinyle (B) ensemble,
**caractérisée en ce que** les (méth)acrylates d'alkyle (A1) sont un mélange de
(A1a) 50 à 99 % en moles d'au moins un (méth)acrylate d'alkyle (A1a) de formule générale H₂C=C(R²)-COOR³, dans laquelle R² représente H ou un groupe méthyle et R³ représente un radical alkyle linéaire de 18 à 24 atomes de carbone, et
(A1b) 1 à 49 % en moles d'au moins un (méth)acrylate d'alkyle (A1b) de formule générale H₂C=C(R²)-COOR⁴, dans laquelle R² a la signification déjà définie et R⁴ représente un radical hydrocarboné choisi dans le groupe constitué par les radicaux R^{4a}, R^{4b} et R^{4c}, et les radicaux sont tels que définis ci-après :
R^{4a} : radicaux alkyle linéaires de 1 à 11 atomes de carbone,
R^{4b} : radicaux alkyle ramifiés de 4 à 60 atomes de carbone, et
R^{4c} : radicaux alkyle cycliques de 5 à 20 atomes de carbone,
à condition que la somme des quantités de (A1a) et (A1b) soit de 100 % en moles.

2. Composition polymère selon la revendication 1, **caractérisée en ce que** R^{4a} est un radical alkyle linéaire de 2 à 6 atomes de carbone.

3. Composition polymère selon la revendication 1 ou 2, **caractérisée en ce que** R^{4b} est un radical alkyle ramifié de 4 à 30 atomes de carbone.

4. Composition polymère selon la revendication 1, **caractérisée en ce que** R^{4b} est un radical alkyle ramifié de 4 à 17 atomes de carbone.

5. Composition polymère selon la revendication 1, **caractérisée en ce que** R^{4c} est un radical alkyle cyclique de 6 à 10 atomes de carbone.

6. Composition polymère selon l'une quelconque des revendications 1 à 5, **caractérisée en ce que** le poids moléculaire moyen M_{w} des copolymères d'éthylène-ester de vinyle utilisés est d'au moins 30 000 g/mol.

7. Composition polymère selon l'une quelconque des revendications 1 à 6, **caractérisée en ce que** les copolymères d'éthylène-ester de vinyle (B) comprennent 55 à 75 % en poids d'éthylène et 25 à 40 % en poids d'ester de vinyle.

8. Composition polymère selon l'une quelconque des revendications 1 à 6, **caractérisée en ce que** les copolymères d'éthylène-ester de vinyle (B) comprennent 60 à 75 % en poids d'éthylène et 25 à 40 % en poids d'ester de vinyle.

9. Composition polymère selon l'une quelconque des revendications 1 à 8, **caractérisée en ce que** la quantité des monomères (A) est de 75 à 85 % en poids et celle des copolymères d'éthylène-ester de vinyle (B) est de 15 à 25 % en poids, par rapport à la somme des monomères (A) et des copolymères d'éthylène-ester de vinyle (B).

10. Composition polymère selon l'une quelconque des revendications 1 à 9, **caractérisée en ce que** la composition polymère comprend en outre des hydrocarbures en tant que solvant.

11. Composition polymère selon la revendication 10, **caractérisée en ce que** les hydrocarbures présentent un point de flamme ≥ 60 °C.

12. Composition polymère selon la revendication 10 ou 11, **caractérisée en ce que** la concentration de la composition polymère dans le solvant est de 20 à 80 % en poids, par rapport à la somme de tous les composants du mélange.

13. Utilisation d'une composition polymère selon l'une quelconque des revendications 1 à 12 en tant qu'agent d'abaissement du point d'écoulement pour pétrole, huile minérale et/ou produits d'huile minérale, par ajout d'au moins une composition polymère selon l'une quelconque des revendications 1 à 12 au pétrole, à l'huile minérale et/ou aux produits d'huile minérale.

14. Utilisation selon la revendication 13, **caractérisée en ce que** la composition polymère utilisée comprend des hydrocarbures en tant que solvant.

15. Utilisation selon la revendication 14, **caractérisée en ce que** les hydrocarbures présentent un point de flamme ≥ 60 °C.

16. Utilisation selon l'une quelconque des revendications 13 à 15, **caractérisée en ce que** la composition polymère utilisée comprend en outre au moins un dispersant de cire.

17. Utilisation selon les revendications 13 à 16, **caractérisée en ce que** la quantité ajoutée est de 50 à 1 500 ppm de la composition polymère par rapport à l'huile.

18. Utilisation selon l'une quelconque des revendications 13 à 17, **caractérisée en ce qu'**il s'agit de pétrole et la formulation est injectée dans une canalisation de pétrole.

19. Utilisation selon l'une quelconque des revendications 13 à 17, **caractérisée en ce qu'**il s'agit de pétrole et la formulation est injectée dans un puits de production.

20. Utilisation selon l'une quelconque des revendications 18 ou 19, **caractérisée en ce que** l'injection a lieu sur une plateforme en mer.

21. Utilisation d'une composition polymère selon l'une quelconque des revendications 1 à 12 pour éviter les dépôts de cire sur des surfaces qui sont en contact avec du pétrole, de l'huile minérale et/ou des produits d'huile minérale, par ajout d'au moins une formulation selon l'une quelconque des revendications 1 à 12 au pétrole, à l'huile minérale et/ou aux produits d'huile minérale.
